# EUROPEAN PATENT APPLICATION

(11) **EP 4 484 275 A1**
(43) Date of publication of application: **01.01.2025**
(21) Application number: 23182097.8
(22) Date of filing: 28.06.2023
(51) Int. Cl.: B64C 1/06, B64C 1/18, B64F 5/10, F16B 7/18

(54) **MOUNTING INTERFACE FOR TRUSSWORK**

(71) Applicant: Airbus Operations GmbH, 21129 Hamburg (DE)
(72) Inventor: Poppe, Andreas, Hamburg (DE); Benthien, Hermann, Hamburg (DE)

(57) **Abstract**

In order to provide improved connections for truss work members to a support structure, a connector (10) for a mounting interface of a trusswork is provided. The connector comprising a body with a first portion (12) and a second portion (14). A central opening (16) is provided in the body having an inner wall (18) configured for receiving a connection end of a truss member. The first portion and the second portion are arranged concentrically. The first portion is having first circumferential edge sections (20), and the second portion is having second circumferential edge sections (22). The first and second circumferential edge sections are spaced apart by gap sections 24 that are configured to receive connecting flanges of a support structure. The gap sections are forming segments along a virtual surface that is curved at least in one direction.

## Description

### FIELD OF THE INVENTION

The present invention relates to a connector for a mounting interface of a trusswork, to a mounting interface on a support arrangement, to a mounting system for a trusswork in an aircraft, to an aircraft with a fuselage and a wing arrangement and to a method for connecting a member of a trusswork to a support structure.

### BACKGROUND OF THE INVENTION

In aircraft construction, e.g. when mounting a cabin floor within a fuselage, truss works can be used that are connected to the fuselage structure commonly comprising frames and stringers carrying an outer skin. For mounting trusswork members to the fuselage structure, interfaces are provided for achieving the necessary load transfer and connection. However, it has been shown that correct alignment and flexibility during assembly may require complex connectors.

### SUMMARY OF THE INVENTION

There may thus be a need to provide improved connections for truss work members to a support structure like frames and stringers.

The object of the present invention is solved by the subject-matter of the independent claims; further embodiments are incorporated in the dependent claims. It should be noted that the following described aspects of the invention apply also for the connector for a mounting interface of a trusswork, for the mounting interface on a support arrangement, for the mounting system for a trusswork in an aircraft, for the aircraft with a fuselage and a wing arrangement and for the method for connecting a member of a trusswork to a support structure.

According to the present invention, a connector for a mounting interface of a trusswork is provided. The connector comprises a body with a first portion and a second portion. A central opening is provided in the body having an inner wall configured for receiving a connection end of a truss member. The first portion and the second portion are arranged concentrically. The first portion is having first circumferential edge sections, and the second portion is having second circumferential edge sections. The first and second circumferential edge sections are spaced apart by gap sections that are configured to receive connecting flanges of a support structure. The gap sections are forming segments along a virtual surface that is curved at least in one direction.

As an advantage, the curved virtual surface allows pivoting motion when engaged with a counterpart. This provides tolerance compensation and improved alignment.

The curved connection interface provides a rotary nut.

As an example, the advantages of a rotary nut are the capability of a smooth load introduction into the primary structure. This also means less corrosion through around 80% bearing pressure reduction. Further, the rotary nut also has the advantage of less material through the optimized load path similar to a hip joint principle. Further, also small rotations are allowed to provide tolerance compensation. By providing the curved interconnecting surface, also buckling reinforcements is provided. Further, a thread interface can be provided for a screwed and adjustable connection. Another advantage is the option to have the interface as an integrated interface on the primary structure. Further, less parts mean a higher efficiency during assembly and also for maintenance and repair. The interface also considers primary insulation. The interface can also be integrated into frame couplings or channel fittings.

According to an example, the central opening provided in the body is having an inner thread at the inner wall.

According to an example, the first portion and the second portion are attachable to each other.

According to an example, one of the first portion and the second portion comprises an opening with an inner attachment thread. The other one of the first portion and the second portion comprises a protrusion with an outer attachment thread to engage the inner attachment thread.

According to another example, the first portion and the second portion are integrally formed. The connector is mountable to a mounting interface via a plug-and-turn movement like a bayonet closure.

According to the present invention, also a mounting interface on a support arrangement is provided. The interface comprises a connector according to one of the preceding examples and a base structure from which connecting flange portions are protruding that are arranged as segments of an interconnecting surface that is curved at least in one direction. The connecting flange portions are arranged engaged with the gap sections of the connector allowing a pivoting relative movement between the connector and the base structure.

According to an example, in a first variation, the interconnecting surface is curved in two directions forming a spherical interconnecting surface. In a second variation, the interconnecting surface is curved in two directions forming an ellipsoid surface.

According to the present invention, also a mounting system for a trusswork in an aircraft is provided. The system comprises at least one mounting interface according to one of the examples above and at least one truss member comprising a connection end. The connection end comprises a coupling end part for engaging with the inner wall of the connector of the mounting interface.

According to an example, the central opening provided in the body is having an inner thread and the coupling end part is provided with an outer thread.

According to an example, the threaded bolt comprises a first threaded segment for engaging with the inner thread of the connector of the mounting interface, and a second threaded segment for engaging with the inner connection thread of the truss member.

As an option, the first threaded segment has an opposite thread direction than the second threaded segment.

According to the present invention, also an aircraft with a fuselage and a wing arrangement is provided. The at least one of the fuselage and the wing arrangement comprises a primary structure with at least one truss work. The truss work comprises a plurality of truss members connected via joints. At least a part of the joints is provided as mounting interfaces according to one of the examples above.

According to the present invention, also a method for connecting a member of a trusswork to a support structure is provided. The method comprises the following steps:
- providing a base structure from which connecting flange portions are protruding that are arranged as segments of an interconnecting surface that is curved at least in one direction;
- providing a connector comprising a body with a first portion and a second portion; wherein a central opening is provided in the body having an inner wall configured for receiving a connection end of a truss member; wherein the first portion and the second portion are arranged concentrically; wherein the first portion is having first circumferential edge sections, and the second portion is having second circumferential edge sections; wherein the first and second circumferential edge sections are spaced apart by gap sections that are configured to receive connecting flanges of a support structure; and wherein the gap sections are forming segments along a virtual surface that is curved at least in one direction;
- providing a truss member comprising a connection end; wherein the connection end comprises a coupling end part for engaging with the inner wall of the connector of the mounting interface; and
- inserting the coupling end part into the central opening.

According to an aspect, a hybrid joint is provided that provides a bending-stiff connection in Y-direction of an aircraft with tolerance capability. Using buckling reinforcements for a rotary nut to create a form fit load introduction with a combination of two hip joint nuts, creates a rotary connection for tolerance compensation for bending stiff attachment which is preferred for structural attachments like the floor strut or the crossbeam, for example. The attachment bolt/screw can be hollow and improved according to bending stiffness.

The opportunity of a downward movement of the locking bolt allows a movement of the correct position and then the final locking in the right position. Thus, an installation with sticked tolerance compensation is provided.

The rotary nut provides a thread interface for screwed and adjustable connection. In an option, a spring lock can be used as light anti-rotation device.

In an example, if the nut has to hold a torque moment, a form fit anti-rotation device is provided. As an option, this form fit locking can have a defined floating.

According to an aspect, a rotary interface for a screw is provided on a channel fitting with an integrated so-called bubble interface.

In an option, a rotary connection for tolerance compensation of a truss work is provided. in an example, a double bubble interface allows a complete sheet metal design which is able to handle high loads. In an example, the double bubble bracket connects seat rail, crossbeam, tie down point and provides dosing angle and a vertical connector bracket.

According to an aspect, a connector is provided having curved load transfer portions allowing a pivoting compensation. A central hole in the connector may be provided having a thread. The hole allows for improved mounting workflow and increases adjustability.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1a shows an example of a base structure; Fig. 1b shows an example of a first portion of a connector in the context of the base structure of Fig. 1a; and Fig. 1c shows the first portion of Fig. 1b together with an example of a second portion of the connector.
Fig. 2 shows an example of a mounting interface.
Fig. 3 shows a cross-section through an aircraft with a fuselage and a wing arrangement.
Fig. 4 shows basic steps of an example of a method for connecting a member of a trusswork to a support structure.
Fig. 5a shows an example of a mounting system in a vertical cross-section in an alignment or pre-mounting stage; Fig. 5b shows the mounted state of Fig. 5a.
Fig. 6a shows another example of a mounting system in a vertical cross-section in an alignment or pre-mounting stage; Fig. 6b shows the mounted state of Fig. 6a.
Fig. 7a shows a further example of a mounting system in a vertical cross-section in an alignment or pre-mounting stage; Fig. 7b shows the mounted state of Fig. 7a.
Fig. 8a shows a furthermore example of a mounting system in a vertical cross-section in an alignment or pre-mounting stage; Fig. 8b shows the mounted state of Fig. 8a.
Fig. 9a shows another example of a mounting system in a vertical cross-section in an alignment or pre-mounting stage; Fig. 9b shows the mounted state of Fig. 9a.
Fig. 10a shows an example of a mounting system in a vertical cross-section in an alignment or pre-mounting stage; Fig. 10b shows a further mounting step of the example of Fig. 10a; Fig. 10c shows a still further mounting step of the example of Fig. 10a; Fig. 10d shows the mounted state of Fig. 10a.
Fig. 11 shows an example of connection point for a support of a cabin floor connected to a frame of a fuselage in a vertical cross-section.
Fig. 12 shows another example of a mounting system in a vertical cross-section.
Fig. 13 shows a further example of a mounting system in a vertical cross-section.
Fig. 14 shows another example of connection point for a support of a cabin floor connected to a frame of a fuselage in a vertical cross-section.
Fig. 15 shows an example of sheet-like preform for a base structure to be added to a fuselage structure.
Fig. 16 shows the example of Fig. 15 in a folded way when applied to form an example of the mounting system.
Fig. 17 shows another example of sheet-like preform for a base structure to be added to a fuselage structure.
Fig. 18 shows the example of Fig. 17 in a folded way when applied to form an example of the mounting system.
Fig. 19 shows an example of a support for a cabin floor in a fuselage of an aircraft in a vertical cross section.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

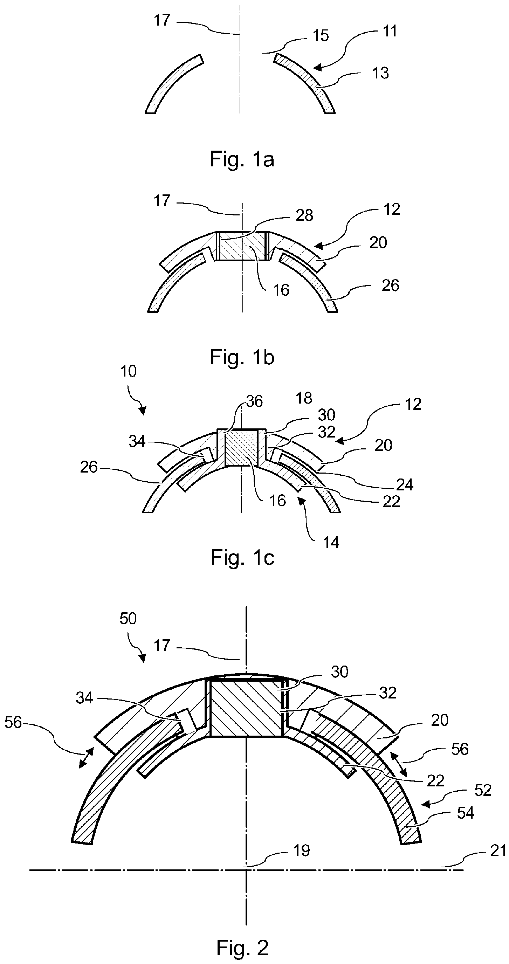

It is provided a connector 10 for a mounting interface of a trusswork. The connector 10 comprises a body with a first portion 12, shown in Fig. 1b as an upper portion. The connector 10 also comprises a second portion 14, shown in Fig. 1c as a lower portion. A central opening 16 is provided in the body having an inner wall 18, see Fig. 1c, configured for receiving a connection end of a truss member. The first portion 12 and the second portion 14 are arranged concentrically. The first portion 12 is having first circumferential edge sections 20, and the second portion 14 is having second circumferential edge sections 22. The first and second circumferential edge sections 20, 22 are spaced apart by gap sections 24 that are configured to receive connecting flanges 26, indicated for better understanding, of a support structure. The gap sections 24 are forming segments along a virtual surface that is curved at least in one direction.

Fig. 1a shows an example of a base structure 11 that will be explained further below. The base structure 11 is shown with connecting flange portions 13 that are protruding as segments of an interconnecting surface that is curved at least in one direction. A central opening or hole 15 is shown for which an axis 17 is indicated. The connecting flange portions 13 are examples for the above-mentioned connecting flanges 26.

Fig. 1b shows an example of the first portion 12 of a connector in the context of the base structure 11 of Fig. 1a.

Fig. 1c shows the first portion 12 of Fig. 1b together with an example of the second portion 14 of the connector 10.

It is noted that Figs. 1a-c show the base structure 11 in addition to the connector 10 for a better understanding.

The term "connector" refers to an intermediate part or component that is mounted to a supporting base structure for load bearing and load transfer purposes. The truss member is then attached to the connector. Thus, the connector serves as an adapter between the base structure and the truss member.

The first and second portion are provided as washer-like plates forming the gap in at least some circumferential portions. In an example, a continuously extending gap is formed. The gap is not plane-shaped but curved at least in one direction.

The first portion can also be referred to as an upper portion.

The second portion can also be referred to as a lower portion.

The term "concentrically" refers to an arrangement aligned with the central opening.

The term "edge sections" refers to examples with separate sections, i.e. an edge with gaps between the edge sections or examples with a continuous edge.

In an option of the example of Fig. 1c, the first portion 12 and the second portion 14 are attachable to each other.

The term "attachable" refers to any form of holding the two portions together in a releasable or non-releasable manner.

The first portion 12 and the second portion 14 are provided with an interlocking connection, such as a thread connection, clamp connection, click/snap connection or any other formfitting connection.

In another example, the first portion 12 and the second portion 14 are provided with a bonding or gluing connection.

In a further example, the first portion 12 and the second portion 14 are provided with a reforming connection like a rivet connection in which pressing forces are reforming an interface of the first portion 12 and the second portion 14 to securely attach the two portions with each other.

In an option of the example of Fig. 1c, one of the first portion and the second portion, for example the first portion 12, comprises an opening, such as the opening 16, with an inner attachment thread 28, see also Fib. 1b. The other one of the first portion and the second portion, for example the first portion 12, comprises a protrusion 30 with an outer attachment thread 32 to engage the inner attachment thread 28.

In an example, the first portion 12 forms an upper nut and the second portion 14 forms a lower nut.

In an option, the portion with the inner attachment thread, e.g. the first portion 12, is provided with edge protrusions 34 towards one or both sides providing an extended thread portion.

In another option, not shown in detail, the first portion 12 and the second portion 14 are integrally formed. The connector 10 is mountable to a mounting interface via a plug-and-turn movement like a bayonet closure.

In an option, the central opening 16 provided in the body is having an inner thread 36 at the inner wall 18.

This provides a secure connection plus length adjustment.

However, in a simplified option, the connection is a sticked connection where a linear member is inserted into the opening and twisted for locking against being pulled out or pushed in further (see below).

In an option, not further shown in detail, the interconnecting surface is provided as a semi-shell structure. For example, the interconnecting surface is provided as barrel segment, such as a cylinder segment.

The mounting interface can be referred to as interface. The mounting interface can also be referred to as joint.

In an example, the base structure is a primary structure of an aircraft.

In another option, shown e.g. in Fig. 1c, the interconnecting surface is curved in two directions forming a spherical interconnecting surface.

In a still further option, ii) the interconnecting surface is curved in two directions forming an ellipsoid surface.

In an example, the interconnecting surface is forming a sphere portion.

In another example, the interconnecting surface is forming an egg-like portion.

In an option, the connector 10 is hold to the base structure rotatably around an axis aligned with the inner thread, such as the axis 17.

In an option, the rotation can be blocked in a temporal manner. For example, a releasable form fit blocking blocks the rotation, such as an inserted pin or bolt.

In an example, the base structure is a tube of a trusswork, and the curved shape of the interconnecting surface has a center point aligned with a neutral fiber of the tube of the trusswork.

In an option, the mounting interface provides a tolerance compensator by being adjustable at least in one pivoting direction. As an additional option that can also be omitted, also an adjustability is provided in a load bearing direction aligned with a longitudinal axis of a mounted truss member (see also below).

The mounting interface provides a rotational connection to a sheet or flange member comprising structure, such as air frames in a fuselage.

An interface is provided suitable for any type of sheet-part of a primary structure, such as a sheet-metal part of a frame or stringer, to provide a load introduction joint for connecting truss work members.

Fig. 2 shows an example of a mounting interface 50 on a support arrangement. The interface 50 comprises the connector 10 according to the examples above and below. Further, the interface 50 comprises a base structure 52, e.g. the base structure 11, from which connecting flange portions 54, e.g. the connecting flange portions 13, are protruding that are arranged as segments of an interconnecting surface that is curved at least in one direction. The connecting flange portions 54 are arranged engaged with the gap sections 24 of the connector 10 allowing a pivoting relative movement between the connector 10 and the base structure 52.

A crossing point 19 of the vertical axis 17 and a horizontal axis 21 indicates a point of rotation for the pivoting movement. A possible movement and tolerance compensation is indicated with double arrows 56.

A free space between the protrusions 34 and the edges of the connecting flange portions 54 allows for the pivoting movement.

Due to the central opening, also tolerance compensation along the connection direction is provided. The central opening allows mount and adjustment of trusswork members.

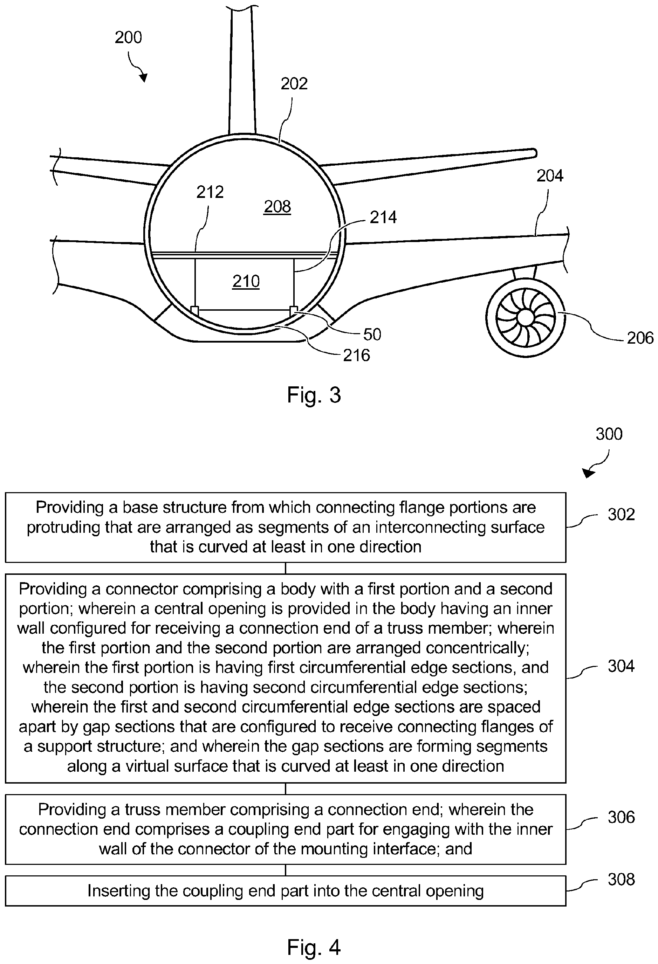

Fig. 3 shows a cross-section through an aircraft 200 with a fuselage 202 and a wing arrangement 204. At least one of the fuselage 202 and the wing arrangement 204 comprises a primary structure and at least one truss work is provided connected to the primary structure. The truss work comprises a plurality of truss members connected via joints. At least a part of the joints is provided as mounting interfaces 50 according to one of the examples above and below.

Fig. 3 shows an aircraft engine 206 mounted to the wing structure 204. A cabin space 208 is provided within the fuselage 202. The cabin space 208 is separated from a cargo space 210 by a cabin floor 212. The cabin floor 212 is supported by support columns 214 that are resting on frames 216 of the fuselage 202 via the mounting interfaces 50.

Fig. 4 shows basic steps of an example of a method 300 for connecting a member of a truss work to a support structure. The method 300 comprises the following steps:
- In a first step 302, a base structure is provided from which connecting flange portions are protruding that are arranged as segments of an interconnecting surface that is curved at least in one direction.
- In a second step 304, a connector is provided comprising a body with a first portion and a second portion. A central opening is provided in the body having an inner wall configured for receiving a connection end of a truss member. The first portion and the second portion are arranged concentrically. The first portion is having first circumferential edge sections, and the second portion is having second circumferential edge sections. The first and second circumferential edge sections are spaced apart by gap sections that are configured to receive connecting flanges of a support structure. The gap sections are forming segments along a virtual surface that is curved at least in one direction.
- In a third step 306, a truss member is provided comprising a connection end. The connection end comprises a coupling end part for engaging with the inner wall of the connector of the mounting interface.
- In a fourth step 308, the coupling end part is inserted into the central opening.

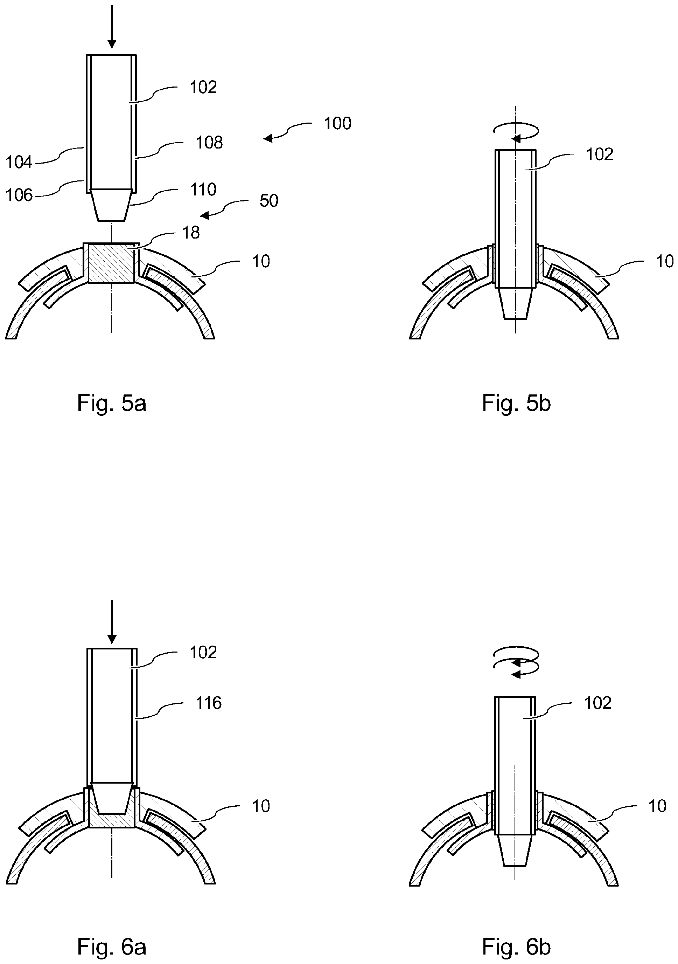

Fig. 5a shows an example of a mounting system 100 for a trusswork in an aircraft in a vertical cross-section in an alignment or pre-mounting stage. Fig. 5b shows the mounted state of Fig. 5a. The mounting system 100 comprises at least one example of the mounting interface 50 according to one of the examples above and below. The mounting system 100 comprises at least one truss member 102 comprising a connection end 104. The connection end 104 comprises a coupling end part 106 for engaging with the inner wall 18 of the connector 10 of the mounting interface 50.

The mounting system 100 can also be referred to as connecting arrangement or joint structure. The mounting system 100 can also be referred to as system.

In an option, shown in Fig. 5a, the central opening 18 provided in the body is having an inner thread and the coupling end part 106 is provided with an outer thread 108.

The truss member 102 can be provided with a tapered end 110 for an easier insertion in the central opening 18.

Fig. 5a shows the action step of inserting the truss member 102. In Fig. 5b, a screwing movement is indicated with a rotating arrow.

Fig. 6a shows another example of the mounting system 100 in a vertical cross-section in an alignment or pre-mounting stage. Fig. 6b shows the mounted state of Fig. 6a. A pair of rotation arrows indicates the option to rotate both the truss member 102 and the connector 10.

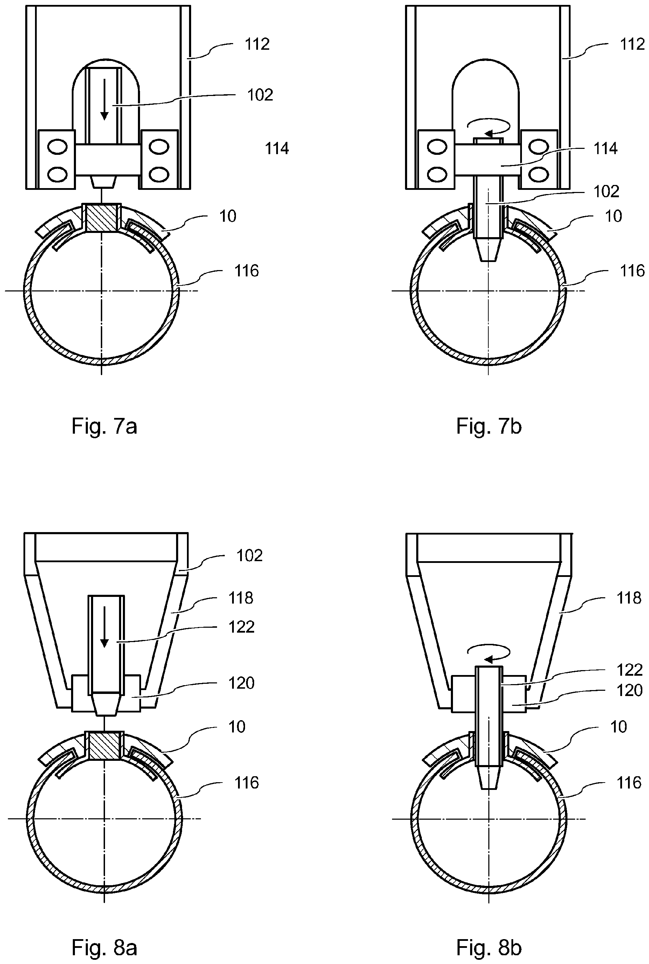

Fig. 7a shows a further example of the mounting system 100 in a vertical cross-section in an alignment or pre-mounting stage; Fig. 7b shows the mounted state of Fig. 7a. The truss member 102 is provided as an H-shaped profile 112. An end adapter 114 is provided with a threaded insert. By rotating the end adapter 114, the connection with the connector is provided. A tube-like shape 116 indicates a primary structure.

In an option, a nut portion with an inner connection thread is provided at the truss member. The connection end is mounted to the truss member via a thread connection. The connection end is provided as a threaded bolt.

In an example, the threaded bolt is screwed into the truss member, and, for connection, the threaded bolt is rotated gradually extending towards the central opening and then engaging with the inner thread for mounting to the connector.

In an option, the threaded bolt comprises a first threaded segment for engaging with the inner thread of the connector of the mounting interface, and a second threaded segment for engaging with the inner connection thread of the truss member. As an additional option, the first threaded segment has an opposite thread direction than the second threaded segment.

In an option, a thread with a low thread pitch is provided to form a self-locking thread connection.

When providing a counter-orientation of a two-thread bolt, a double travel height or lifting distance is provided, e.g. compensating the low thread pitch.

When the connector of the mounting interface is rotatably hold, a rotation of the connector results in a displacement of the threaded bolt in a longitudinal direction providing an option for length adjustment.

In an option, the truss member comprises a mounting adapter rotatably hold in the truss member for engaging of the threaded bolt;

When the connector of the mounting interface is rotatably hold, a rotation of the connector results in a displacement of the threaded bolt in a longitudinal direction providing an option for length adjustment.

In an example, the base structure is a fuselage construction member of the group comprising frames and stringers. The truss member is part of a support structure for mounting a cabin floor within the fuselage.

In a preferred example, the fuselage construction member is a frame section. The curved interconnecting surface is provided e.g. by roll-forming in an upper flange member of the frame section.

In another example, the base structure is provided as fitting part connected to a fuselage construction member like a frame section. The curved interconnecting surface is provided e.g. by folding a sheet or by roll-forming or by pressing the fitting part.

Fig. 8a shows a furthermore example of the mounting system 100 in a vertical cross-section in an alignment or pre-mounting stage; Fig. 8b shows the mounted state of Fig. 8a. The truss member 102 is provided with a pipe profile interface 118 having a tapered end section. An insert 120 is provided to allow a connecting bolt 122 to be connected to the connector, e.g. by a screwing movement. The insert 122 can be fixed or also rotatable.

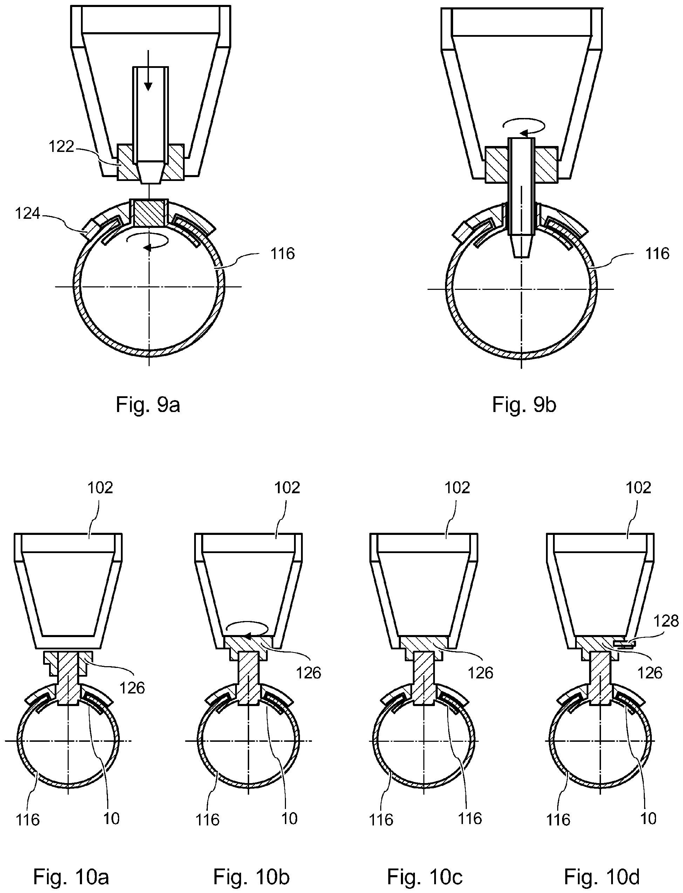

Fig. 9a shows another example of the mounting system 100 in a vertical cross-section in an alignment or pre-mounting stage; Fig. 9b shows the mounted state of Fig. 9a. As an additional adjustment option, the connector 10 can be provided to be rotatable. A locking element 124 such as a pin can be provided for an assembly procedure.

Fig. 10a shows an example of the mounting system 100 in a vertical cross-section in an alignment or pre-mounting stage; Fig. 10b shows a further mounting step of the example of Fig. 10a; Fig. 10c shows a still further mounting step of the example of Fig. 10a; Fig. 10d shows the mounted state of Fig. 10a. An insert 126 is provided that can be inserted and then rotated. For example, the insert is having an outer thread and the end portion of the truss member is having an inner thread. An insert rotating locking member 128 can be provided for an easier mount.

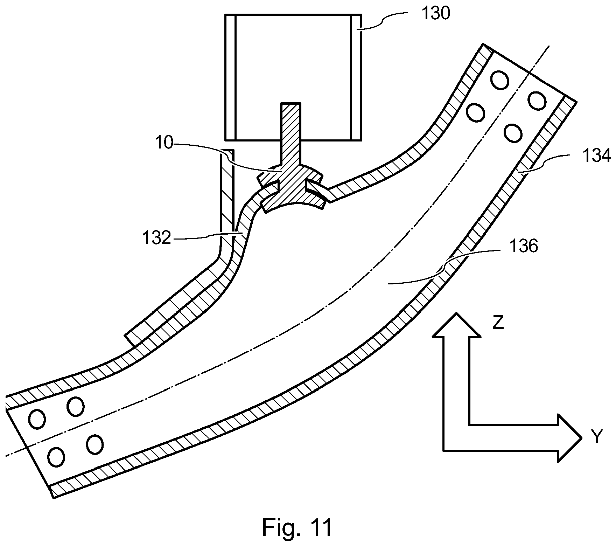

Fig. 11 shows an example of connection point for a support of a cabin floor connected to a frame of a fuselage in a vertical cross-section. A vertical strut 130 is indicated mounted to a coupling 132 of a rollformed frame 134. As an example, the interface is a plastic formed interface forming a curved engagement surface (indicated with broken line circle 136 for mounting an example of the connector 10). A coordinate index illustrates Z- and Y-axis of an aircraft.

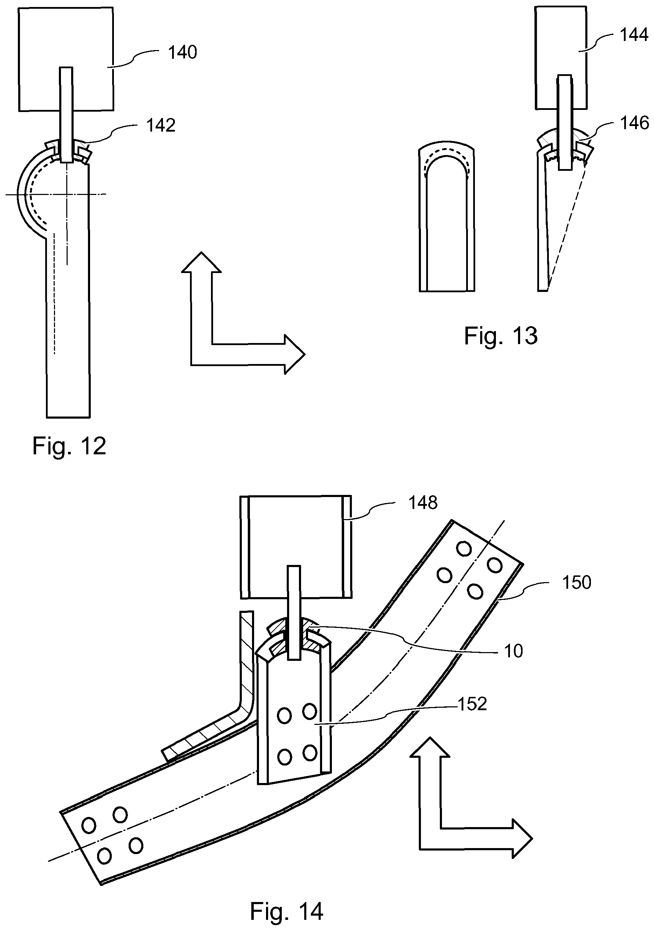

Fig. 12 shows another example of the mounting system in a vertical cross-section. A vertical strut 140 is mounted to an example 142 of the rotary joint, i.e. the connector 10 providing a channel fitting.

Fig. 13 shows a further example of the mounting system in a vertical cross-section. A vertical strut 144 is mounted to a base structure via an example 146 of the connector.

Fig. 14 shows another example of a connection point for a support of a cabin floor connected to a frame of a fuselage in a vertical cross-section. A vertical strut 148 is mounted to a frame 150 via an example of the connector 10.The base structure can be configured as a channel fitting 152 attached to the frame 150.

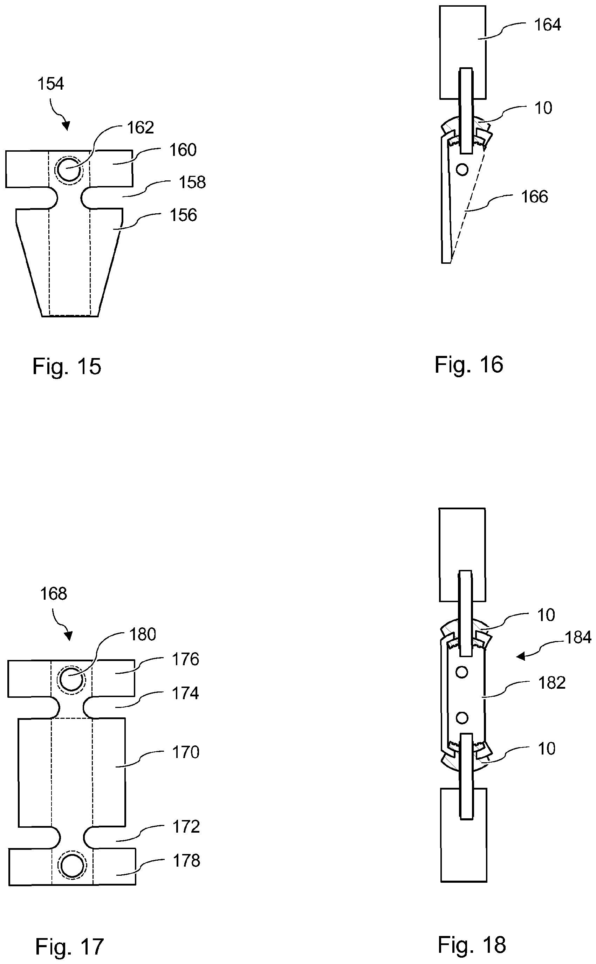

Fig. 15 shows an example of sheet-like preform for a base structure to be added to a fuselage structure. A sheet metal part 154 comprises first and second triangular sections 156 that can be folded. A gap 158 is provided on both lateral sides, separating a first and a second ear-like structure 160. An opening 162 is also shown.

Fig. 16 shows the example of Fig. 15 in a folded way when applied to form a mounting system. A vertical strut 164 is mounted to a channel fitting 166 generated from the folded sheet metal part 154.

Fig. 17 shows another example of sheet-like preform for a base structure to be added to a fuselage structure. A sheet metal part 168 comprises first and second lateral sections 170 that can be folded. A first gap 172 and second gap 174 are provided on both lateral sides, separating an upper first and second ear-like structure 176 and a lower first and second ear-like structure 178. An opening 180 is also provided.

Fig. 18 shows the example of Fig. 17 in a folded way when applied to form a mounting system. A vertical strut 182 is mounted to a double interface 184 generated from the folded sheet metal part 168.

The system interface integration increases the stiffness against lateral rapid decompression. The lower bubble bracket connects the vertical connector sheet metal bracket, the lower dosing, the lower tiedown and the sheet metal frame. This bracket can also be integrated in a sheet metal frame or sheet metal coupling.

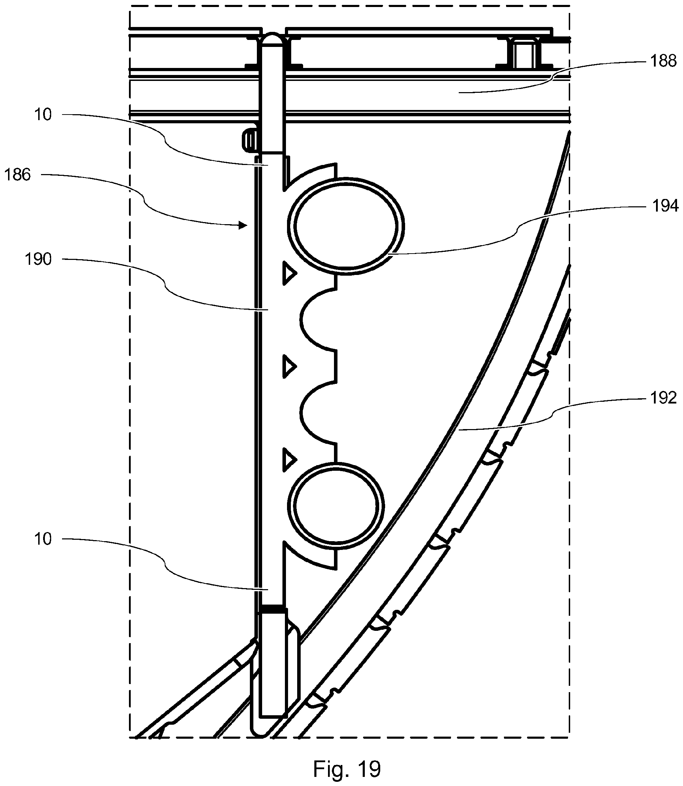

Fig. 19 shows an example of a support 186 for a cabin floor 188 in a fuselage of an aircraft in a vertical cross section. The support comprises a vertical beam 190 connected to the cabin floor 188 on its upper end and to a frame 192 of the fuselage on its lower end. Due to the connectors, which are rather small, a longer extension of the vertical beam 190 is provided allowing more installation space 194 for an infrastructure onboard the aircraft.

The mounting system is suitable for truss works, which are generally a light structure. The mounting interface for a truss work, e.g. to the primary structure, allows a rotary connection. A weight impact to the primary structure through a secondary structure interface is minimized. In an example, the mounting interface provides a rotary interface adapter for a sticked or screwed connection to allow elongate able rod bodies. The mounting interface can be provided as structural reinforcement for the primary structure which is thus optimized for such an attachment.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A connector (10) for a mounting interface of a trusswork, the connector comprising a body with:
- a first portion (12); and
- a second portion (14);
wherein a central opening (16) is provided in the body having an inner wall (18) configured for receiving a connection end of a truss member;
wherein the first portion and the second portion are arranged concentrically;
wherein the first portion is having first circumferential edge sections (20), and the second portion is having second circumferential edge sections (22); wherein the first and second circumferential edge sections are spaced apart by gap sections (24) that are configured to receive connecting flanges of a support structure; and
wherein the gap sections are forming segments along a virtual surface that is curved at least in one direction.

2. Connector according to claim 1, wherein the central opening provided in the body is having an inner thread (36) at the inner wall.

3. Connector according to claim 1 or 2, wherein the first portion and the second portion are attachable to each other.

4. Connector according to claim 1, 2 or 3, wherein one of the first portion and the second portion comprises an opening with an inner attachment thread (28); and
wherein the other one of the first portion and the second portion comprises a protrusion (30) with an outer attachment thread to engage the inner attachment thread.

5. Connector according to one of the preceding claims, wherein the first portion and the second portion are integrally formed; and
wherein the connector is mountable to a mounting interface via a plug-and-turn movement like a bayonet closure.

6. A mounting interface (50) on a support arrangement, the interface comprising:
- a connector (10) according to one of the preceding claims; and
- a base structure (52) from which connecting flange portions (54) are protruding that are arranged as segments of an interconnecting surface that is curved at least in one direction;
wherein the connecting flange portions are arranged engaged with the gap sections of the connector allowing a pivoting relative movement between the connector and the base structure.

7. Interface according to claim 6, wherein the interconnecting surface is curved in two directions forming:
i) a spherical interconnecting surface; or
ii) an ellipsoid surface.

8. Interface according to claim 6 or 7, wherein the connector is hold to the base structure rotatably around an axis aligned with the inner thread.

9. Interface according to claim 6, 7 or 8, wherein the mounting interface provides a tolerance compensator by being adjustable at least in one pivoting direction; and
wherein, preferably, also an adjustability is provided in a load bearing direction aligned with a longitudinal axis of a mounted truss member.

10. A mounting system (100) for a trusswork in an aircraft, the system comprising:
- at least one mounting interface (50) according to one of claims 6 to 9; and
- at least one truss member (102) comprising a connection end (104);
wherein the connection end comprises a coupling end part (106) for engaging with the inner wall of the connector of the mounting interface.

11. System according to claim 10, wherein the central opening provided in the body is having an inner thread and the coupling end part is provided with an outer thread (108).

12. System according to claim 10 or 11, wherein a nut portion with an inner connection thread is provided at the truss member;
wherein the connection end is mounted to the truss member via a thread connection; and
wherein the connection end is provided as a threaded bolt.

13. System according to claim 12, wherein the threaded bolt comprises a first threaded segment for engaging with the inner thread of the connector of the mounting interface, and a second threaded segment for engaging with the inner connection thread of the truss member; and
wherein, preferably, the first threaded segment has an opposite thread direction than the second threaded segment.

14. An aircraft (200) with a fuselage (202) and a wing arrangement (204), wherein at least one of the fuselage and the wing arrangement comprises a primary structure and wherein at least one truss work is provided connected to the primary structure;
wherein the truss work comprises a plurality of truss members connected via joints; and
wherein at least a part of the joints is provided as mounting interfaces (50) according to one of claims 6 to 9.

15. A method (300) for connecting a member of a trusswork to a support structure, the method comprising the following steps:
- providing (302) a base structure from which connecting flange portions are protruding that are arranged as segments of an interconnecting surface that is curved at least in one direction;
- providing (304) a connector comprising a body with a first portion and a second portion; wherein a central opening is provided in the body having an inner wall configured for receiving a connection end of a truss member; wherein the first portion and the second portion are arranged concentrically; wherein the first portion is having first circumferential edge sections, and the second portion is having second circumferential edge sections; wherein the first and second circumferential edge sections are spaced apart by gap sections that are configured to receive connecting flanges of a support structure; and wherein the gap sections are forming segments along a virtual surface that is curved at least in one direction;
- providing (306) a truss member comprising a connection end; wherein the connection end comprises a coupling end part for engaging with the inner wall of the connector of the mounting interface; and
- inserting (308) the coupling end part into the central opening.
